# EUROPEAN PATENT APPLICATION

(11) **EP 4 123 774 A1**
(43) Date of publication of application: **25.01.2023**
(21) Application number: 21792116.2
(22) Date of filing: 06.04.2021
(51) Int. Cl.: H01M 10/04

(54) **ELECTRODE ASSEMBLY AND SECONDARY BATTERY**

(30) Priority: 20.04.2020 KR 20200047726
(71) Applicant: LG Energy Solution, Ltd., Seoul 07335 (KR)
(72) Inventor: WI, Yoon Bong, Daejeon 34122 (KR); KANG, Tae Won, Daejeon 34122 (KR); PARK, Dong Hyeuk, Daejeon 34122 (KR); JANG, Eung Jin, Daejeon 34122 (KR)
(74) Representative: Plasseraud IP
(86) International application number: PCT/KR2021/004299
(87) International publication number: WO 2021/215703

(57) **Abstract**

To solve the above problem, an electrode assembly according to an embodiment of the present invention includes: a separator sheet, which is formed in a single sheet shape and in which first folding of folding to one side and second folding of folding to the other side are repeated at certain intervals; unit cells, which are formed by stacking a plurality of electrodes and separators and respectively disposed in a plurality of first spaces formed by the first folding of the separator sheet; and independent electrodes, which are respectively disposed in a plurality of second spaces formed by the second folding of the separator sheet and have a first polarity.

## Description

### CROSS-REFERENCE TO RELATED APPLICATION

The present application claims the benefit of the priority of Korean Patent Application No. 10-2020-0047726, filed on April 20, 2020, which is hereby incorporated by reference in its entirety.

### TECHNICAL FIELD

The present invention relates to an electrode assembly and a secondary battery and, more specifically, to an electrode assembly and a secondary battery, capable of enhancing a production rate and resolving inconvenience in processes while exhibiting a high degree of alignment and a high impregnation rate of electrolyte.

### BACKGROUND ART

In general, there are several types of secondary batteries such as nickel cadmium batteries, nickel hydrogen batteries, lithium ion batteries, and lithium ion polymer batteries. These secondary batteries have been applied to and used for not only small products such as digital cameras, P-DVDs, MP3Ps, cellular phones, PDAs, portable game devices, power tools, and E-bikes, but also large products requiring high power such as electric vehicles and hybrid vehicles, and power storage devices or backup-power storage devices for storing surplus generated power and new renewable energy.

In order to manufacture the secondary batteries, first, electrode active material slurry is applied to a positive electrode collector and a negative electrode collector to manufacture a positive electrode (cathode) and a negative electrode (anode), and then, the electrode are stacked on both sides of a separator to form an electrode assembly having a predetermined shape. Subsequently, the electrode assembly is accommodated in a battery case, an electrolyte is injected therein, and then, sealing is performed.

The electrode assemblies are classified into various types. For example, there are: a simple stack type in which positive electrodes, separators, and negative electrodes are simply stacked in an alternate and continuous manner without manufacturing unit cells; a lamination and stack (L&S) type in which, first, unit cells are manufactured by using positive electrodes, separators, and negative electrodes, and then, the unit cells are stacked; a stack and folding (S&F) type in which a plurality of unit cells are spaced and attached on one surface of a separator sheet having a length elongated to the one side, and then, the separator sheet is repeatedly folded from one end in the same direction; and a Z-folding type in which a plurality of electrodes are alternately attached on one surface and the other surface of a separator sheet having a length elongated to the one side, and then, the separator sheet is folded from one end in a specific direction and then folded in the opposite direction in an alternate and repetitive manner.

However, in the simple stack type or in the lamination and stack type, a simple structure, a high degree of freedom for design, and a high impregnation rate of electrolyte are achieved. However, there are problems such as a slow production rate and a deterioration in a degree of alignment. In the lamination and stack type, particularly, both full cells and half cells have to be manufactured, which causes inconvenience in processes. In the stack and folding type, a high production rate and high structural stability are achieved, but there are deteriorations in a degree of alignment and an impregnation rate of electrolyte. Furthermore, both A type bi-cells and C type bi-cells have to be manufactured, which causes inconvenience in processes. Also, in the Z-folding type, a high degree of alignment and a high impregnation rate of electrolyte are achieved, but a production rate is slow.

[PRIOR ART DOCUMENTS] Korean Patent Publication No. 2012-0117306.

### DISCLOSURE OF THE INVENTION

### TECHNICAL PROBLEM

An object of the present invention is to provide an electrode assembly and a secondary battery, capable of enhancing a production rate and resolving inconvenience in processes while exhibiting a high degree of alignment and a high impregnation rate of electrolyte.

The objects of the present invention are not limited to the aforementioned object, but other objects not described herein will be clearly understood by those skilled in the art from descriptions below.

### TECHNICAL SOLUTION

To solve the above problem, an electrode assembly according to an embodiment of the present invention includes: a separator sheet, which is formed in a single sheet shape and in which first folding of folding to one side and second folding of folding to the other side are repeated at certain intervals; unit cells, which are formed by stacking a plurality of electrodes and separators and respectively disposed in a plurality of first spaces formed by the first folding of the separator sheet; and independent electrodes, which are respectively disposed in a plurality of second spaces formed by the second folding of the separator sheet and have a first polarity.

Also, each of the unit cells may be a bi-cell in which an outer electrode is stacked on each of two outermost surfaces, an inner electrode is stacked therein, each of the separators is disposed between the inner electrode and each of the outer electrodes, and the two outer electrodes have the same second polarity.

Also, only one inner electrode may be formed.

Also, the inner electrode may have the same first polarity as the independent electrode.

Also, a plurality of inner electrodes may be formed.

Also, the number of inner electrodes may be an odd number.

Also, a first inner electrode of the inner electrodes may be stacked such that the separator is disposed between the outer electrode and the first inner electrode, and a second inner electrode of the inner electrodes may be stacked such that the separator is disposed between the first inner electrode and the second inner electrode.

Also, the first inner electrode may have the same first polarity as the independent electrode.

Also, the second inner electrode may have the same second polarity as the outer electrode.

To solve the above problem, a secondary battery according to an embodiment of the present invention includes: an electrode assembly; and a battery case configured to accommodate the electrode assembly therein, wherein the electrode assembly includes: a separator sheet, which is formed in a single sheet shape and in which first folding of folding to one side and second folding of folding to the other side are repeated at certain intervals; unit cells, which are formed by stacking a plurality of electrodes and separators and respectively disposed in a plurality of first spaces formed by the first folding of the separator sheet; and independent electrodes, which are respectively disposed in a plurality of second spaces formed by the second folding of the separator sheet and have a first polarity.

Other specific features of the present invention are included in the detailed description and drawings.

### ADVANTAGEOUS EFFECTS

The embodiments of the present invention may have at least the following effects.

When the Z-folding type electrode assembly having the high degree of alignment and the high impregnation rate of electrolyte is manufactured, the plurality of independent electrodes and bi-cells are alternately attached on one surface and the other surface of the separator sheet, and thus, the production rate is enhanced. Also, it is sufficient to manufacture only one type of bi-cells, and thus, the inconvenience in processes may be resolved.

The effects according to the present invention are not limited to those exemplified above, and more various effects are included in the present specification.

### BRIEF DESCRIPTION OF THE DRAWINGS

FIG. 1 is a schematic view of an electrode assembly according to a first embodiment of the present invention.
FIG. 2 is a schematic view of an electrode assembly according to a second embodiment of the present invention.
FIG. 3 is a schematic view of an electrode assembly according to a third embodiment of the present invention.
FIG. 4 is a schematic view of an electrode assembly according to a fourth embodiment of the present invention.
FIG. 5 is a schematic view of an electrode assembly according to a fifth embodiment of the present invention.
FIG. 6 is a schematic view of an electrode assembly according to a sixth embodiment of the present invention.

### MODE FOR CARRYING OUT THE INVENTION

Advantages and features of the present invention, and implementation methods thereof will be clarified through following embodiments described in detail with reference to the accompanying drawings. The present invention may, however, be embodied in various different forms and should not be construed as limited to the embodiments set forth herein. Rather, these embodiments are provided so that this disclosure will be thorough and complete, and will fully convey the scope of the present invention to those skilled in the art. Further, the present invention is defined only by scopes of claims. Like reference numerals refer to like elements throughout.

Unless otherwise defined, all terms (including technical and scientific terms) used herein have the same meaning as commonly understood by one of ordinary skill in the art to which the present invention belongs. Also, terms as defined in a generally used dictionary are not construed ideally or excessively unless defined apparently and specifically.

The terms used in this specification are used only to explain embodiments while not limiting the present invention. In this specification, the singular forms include the plural forms as well, unless the context clearly indicates otherwise. The meaning of "comprises" and/or "comprising" used in the specification does not exclude the presence or addition of one or more components other than the mentioned component.

Hereinafter, preferred embodiments of the present invention will be described in detail with reference to the accompanying drawings.

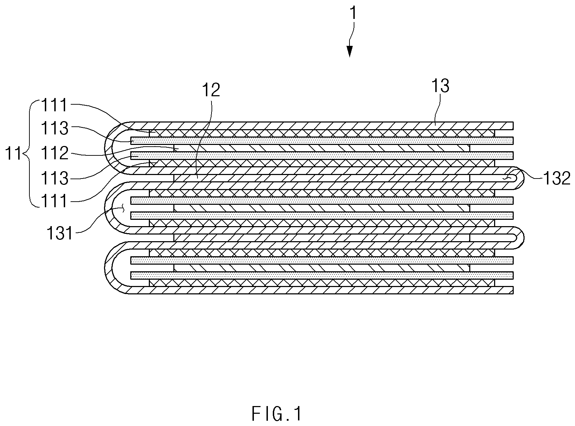

FIG. 1 is a schematic view of an electrode assembly 1 according to a first embodiment of the present invention.

According to embodiments of the present invention, when a Z-folding type electrode assembly 1 having a high degree of alignment and a high impregnation rate of electrolyte is manufactured, a plurality of independent electrodes 12 and bi-cells are alternately attached on one surface and the other surface of a separator sheet 13, and thus, a production rate is enhanced. Also, it is sufficient to manufacture only one type of bi-cells, and thus, inconvenience in processes may be resolved.

To this end, the electrode assembly 1 according to embodiments of the present invention includes: a separator sheet 13, which is formed in a single sheet shape and in which first folding of folding to one side and second folding of folding to the other side are repeated at certain intervals; unit cells 11, which are formed by stacking a plurality of electrodes 111 and 112 and separators 113 and respectively disposed in a plurality of first spaces 131 formed by the first folding of the separator sheet 13; and independent electrodes 12, which are respectively disposed in a plurality of second spaces 132 formed by the second folding of the separator sheet 13 and have a first polarity.

Also, a secondary battery manufactured by using the electrode assembly 1 includes: an electrode assembly 1; and a battery case for accommodating the electrode assembly 1 therein. The electrode assembly 1 includes: a separator sheet 13, which is formed in a single sheet shape and in which first folding of folding to one side and second folding of folding to the other side are repeated at certain intervals; unit cells 11, which are formed by stacking a plurality of electrodes 111 and 112 and separators 113 and respectively disposed in a plurality of first spaces 131 formed by the first folding of the separator sheet 13; and independent electrodes 12, which are respectively disposed in a plurality of second spaces 132 formed by the second folding of the separator sheet 13 and have a first polarity.

The separator sheet 13 is formed in a single elongated sheet shape and wound on a separator reel, and then may be moved while unwound. Also, in the separator sheet 13 in order to manufacture the Z-folding type electrode assembly 1, first folding of folding from one end to one side and second folding of folding to the other side are alternately repeated at certain intervals.

Here, on the basis of the illustration in FIG. 1, the first folding may be referred to as folding toward the right side, and the second folding may be referred to as folding toward the left side. Thus, the plurality of the first spaces 131 formed by the first folding of the separator sheet 13 may be referred to as spaces having closed left sides and opened right sides on the basis of the illustration in FIG. 1, and the plurality of the second spaces 132 formed by the second folding of the separator sheet 13 may be referred to as spaces having closed right sides and opened left sides on the basis of the illustration in FIG. 1.

The unit cells 11 are formed by stacking the plurality of electrodes 111 and 112 and the separators 113 and are respectively disposed in the plurality of first spaces 131 formed by the first folding of the separator sheet 13. Also, the independent electrodes 12 are electrodes which do not constitute the unit cells 11 but are separately formed, and which are respectively disposed in the plurality of second spaces 132 formed by the second folding of the separator sheet 13 and have a first polarity.

Generally, the unit cells are classified into a mono cell and a bi-cell according to types of electrodes positioned on the two outermost sides. The mono cell is a cell in which a positive electrode and a negative electrode are positioned on the two outermost sides of the cell, respectively. There is the most basic structure of the mono cell, such as a positive electrode/a separator/a negative electrode or a positive electrode/a separator/a negative electrode/a separator/a positive electrode/a separator/a negative electrode.

The bi-cell is a cell in which the electrodes having the same polarity are positioned on the two outermost sides of the cell. There is the most basic structure of the bi-cell, such as an A type bi-cell having a positive electrode/separator/negative electrode/separator/positive electrode structure or a C type bi-cell having a negative electrode/separator/positive electrode/separator/negative electrode structure. That is, the A type bi-cell is a cell in which positive electrodes are positioned on the two outermost sides, and the C type bi-cell is a cell in which negative electrodes are positioned on the two sides.

In order to manufacture the unit cell, while the inner electrode is moved to one side by a conveyor belt or the like, the separators are stacked on the top and bottom surfaces of the inner electrode, respectively, and then the outer electrodes may be further stacked thereon. If the unit cell is the bi-cell, the number of inner electrodes may be an odd number such as one. If the unit cell is the mono cell, there is no inner electrode, or the number thereof may be an even number such as two.

The unit cell 11 according to embodiments of the present invention is the bi-cell in which an outer electrode 111 is stacked on each of two outermost surfaces, an inner electrode 112 is stacked therein, each of the separators 113 is disposed between the inner electrode 112 and each of the outer electrodes 111, and the two outer electrodes 111 have the same second polarity. Here, the second polarity is referred to as a polarity opposite to the first polarity.

According to the first embodiment of the present invention, only one inner electrode 112 is formed in the unit cell 11, and the inner electrode 112 may have the same first polarity as an independent electrode 12. Also, the first polarity is a positive polarity, and the second polarity is a negative polarity.

Thus, the independent electrode 12 according to the first embodiment of the present invention is a positive electrode. In the unit cell 11, all of the outer electrodes 111 on the two outermost surfaces are negative electrodes, and the inner electrode 112 is the same positive electrode as the independent electrode 12. That is, as illustrated in FIG. 1, the unit cell 11 is a C type bi-cell having a negative electrode/separator/positive electrode/separator/negative electrode structure.

These unit cells 11 are respectively disposed in the plurality of first spaces 131 formed by the first folding of the separator sheet 13. Also, the independent electrodes 12, i.e., the positive electrodes are respectively disposed in the plurality of second spaces 132 formed by the second folding of the separator sheet 13. Accordingly, the electrode assembly 1 according to the first embodiment of the present invention may be manufactured.

Here, the left side of the first space 131 is closed, but the right side thereof is opened on the basis of the illustration in FIG. 1, and the right side of the second space 132 is closed, but the left side thereof is opened on the basis of the illustration in FIG. 1. Thus, when the electrode assembly 1 is viewed from the right side, the independent electrode 12 is covered and not seen, but only the unit cell 11 is seen. On the other hand, when the electrode assembly 1 is viewed from the left side, the unit cell 11 is covered and not seen, but only the independent electrode 12 is seen.

The electrode assembly 1 is accommodated in a battery case after the electrode assembly 1 is manufactured, and thus, a secondary battery according to the first embodiment of the present invention may be manufactured.

According to the first embodiment of the present invention as described above, it is sufficient to manufacture only the C type bi-cells of the unit cells, and thus, there is no need to separately prepare facilities for manufacturing the A type bi-cells. Therefore, inconvenience in the entire processes may be resolved, and equipment for manufacturing the electrode assembly 1 may be simplified.

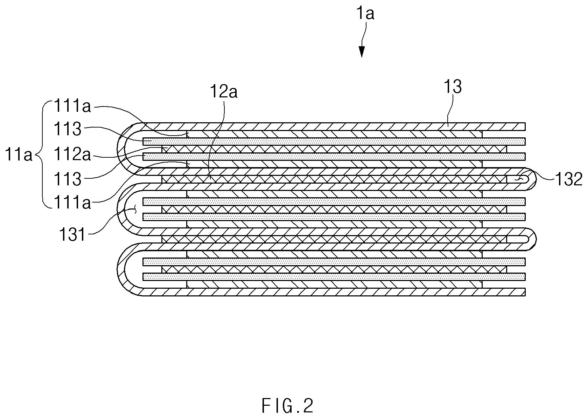

FIG. 2 is a schematic view of an electrode assembly 1a according to a second embodiment of the present invention.

According to the second embodiment of the present invention, only one inner electrode 112a is formed in a unit cell 11a. Also, a first polarity is a negative polarity, and a second polarity is a positive polarity. Hereinafter, the second embodiment of the present invention will be described, but the descriptions overlapping with those of the first embodiment of the present invention will be omitted. However, this is only for ease of description and is not intended to limit the scope of rights.

An independent electrode 12a according to the second embodiment of the present invention is a negative electrode. In the unit cell 11a, all of outer electrodes 111a on the two outermost surfaces are positive electrodes, and the inner electrode 112a is the same negative electrode as the independent electrode 12a. That is, as illustrated in FIG. 2, the unit cell 11a is an A type bi-cell having a positive electrode/separator/negative electrode/separator/positive electrode structure.

These unit cells 11a are respectively disposed in a plurality of first spaces 131 formed by first folding of a separator sheet 13. Also, independent electrodes 12a, i.e., negative electrodes are respectively disposed in a plurality of second spaces 132 formed by second folding of the separator sheet 13. Accordingly, the electrode assembly 1a according to the second embodiment of the present invention may be manufactured.

The electrode assembly 1a is accommodated in a battery case after the electrode assembly 1a is manufactured, and thus, a secondary battery according to the second embodiment of the present invention may be manufactured.

According to the second embodiment of the present invention as described above, it is sufficient to manufacture only the A type bi-cells of the unit cells, and thus, there is no need to separately prepare facilities for manufacturing the C type bi-cells. Therefore, inconvenience in the entire processes may be resolved, and equipment for manufacturing the electrode assembly 1a may be simplified.

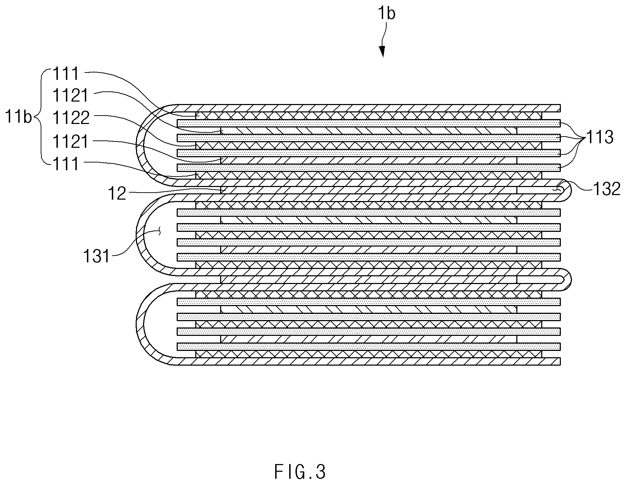

FIG. 3 is a schematic view of an electrode assembly 1b according to a third embodiment of the present invention.

Hereinafter, the third embodiment of the present invention will be described, but the descriptions overlapping with those of the first and second embodiments of the present invention will be omitted. However, this is only for ease of description and is not intended to limit the scope of rights.

According to the third embodiment of the present invention, a plurality of inner electrodes 112 are formed in a unit cell 11b, and particularly, the number of those to be formed is odd. A first inner electrode 1121 of the inner electrodes 112 may be stacked such that a separator 113 is disposed between an outer electrode 111 and the first inner electrode, and a second inner electrode 1122 of the inner electrodes 112 may be stacked such that a separator 113 is disposed between the first inner electrode 1121 and the second inner electrode. In addition, the first inner electrode 1121 may have the same first polarity as an independent electrode 12, and the second inner electrode 1122 may have the same second polarity as the outer electrode 111. Also, the first polarity is a positive polarity, and the second polarity is a negative polarity.

Thus, the independent electrode 12 according to the third embodiment of the present invention is a positive electrode. In the unit cell 11b, all of the outer electrodes 111 on the two outermost surfaces are negative electrodes. If the total number of inner electrodes 112 is three, two first inner electrodes 1121 and one second inner electrode 1122 may be included as illustrated in FIG. 3. Also, the first inner electrode 1121 is the same positive electrode as the independent electrode 12, and the second inner electrode 1122 is the same negative electrode as the outer electrode 111. That is, as illustrated in FIG. 3, the unit cell 11b is a C type bi-cell having a negative electrode/separator/positive electrode/separator/negative electrode/separator/positive electrode/separator/negative electrode structure.

These unit cells 11b are respectively disposed in a plurality of first spaces 131 formed by first folding of a separator sheet 13. Also, independent electrodes 12, i.e., positive electrodes are respectively disposed in a plurality of second spaces 132 formed by second folding of the separator sheet 13. Accordingly, the electrode assembly 1b according to the third embodiment of the present invention may be manufactured.

The electrode assembly 1b is accommodated in a battery case after the electrode assembly 1b is manufactured, and thus, a secondary battery according to the third embodiment of the present invention may be manufactured.

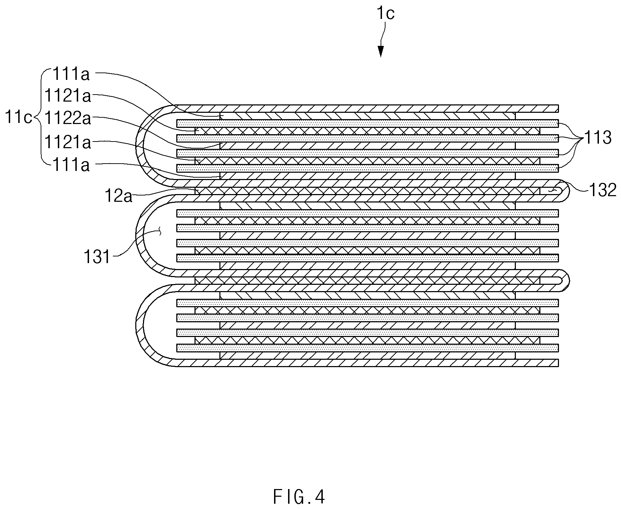

FIG. 4 is a schematic view of an electrode assembly 1c according to a fourth embodiment of the present invention.

According to the fourth embodiment of the present invention, a plurality of inner electrodes 112 are formed in a unit cell 11c. Also, a first polarity is a negative polarity, and a second polarity is a positive polarity. Hereinafter, the fourth embodiment of the present invention will be described, but the descriptions overlapping with those of the first to third embodiments of the present invention will be omitted. However, this is only for ease of description and is not intended to limit the scope of rights.

An independent electrode 12a according to the fourth embodiment of the present invention is a negative electrode. In the unit cell 11c, all of outer electrodes 111a on the two outermost surfaces are positive electrodes. Also, a first inner electrode 1121a is the same negative electrode as the independent electrode 12a, and a second inner electrode 1122a is the same positive electrode as the outer electrode 111a. That is, as illustrated in FIG. 3, the unit cell 11c is an A type bi-cell having a positive electrode/separator/negative electrode/separator/positive electrode/separator/negative electrode/separator/positive electrode structure.

These unit cells 11c are respectively disposed in a plurality of first spaces 131 formed by first folding of a separator sheet 13. Also, independent electrodes 12a, i.e., negative electrodes are respectively disposed in a plurality of second spaces 132 formed by second folding of the separator sheet 13. Accordingly, the electrode assembly 1c according to the fourth embodiment of the present invention may be manufactured.

The electrode assembly 1c is accommodated in a battery case after the electrode assembly 1c is manufactured, and thus, a secondary battery according to the fourth embodiment of the present invention may be manufactured.

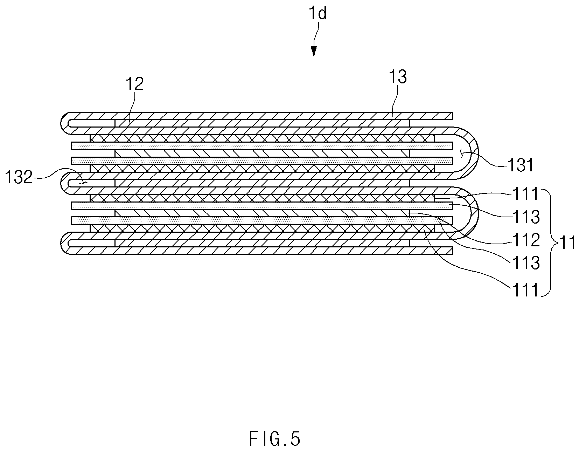

FIG. 5 is a schematic view of an electrode assembly 1d according to a fifth embodiment of the present invention.

According to the fifth embodiment of the present invention, only one inner electrode 112 is formed in a unit cell 11. Also, a first polarity is a positive polarity, and a second polarity is a negative polarity. Hereinafter, the fifth embodiment of the present invention will be described, but the descriptions overlapping with those of the first to fourth embodiments of the present invention will be omitted. However, this is only for ease of description and is not intended to limit the scope of rights.

An independent electrode 12 according to the fifth embodiment of the present invention is a positive electrode. In the unit cell 11, all of outer electrodes 111 on the two outermost surfaces are negative electrodes, and the inner electrode 112 is the same positive electrode as the independent electrode 12. That is, as illustrated in FIG. 5, the unit cell 11 is a C type bi-cell having a negative electrode/separator/positive electrode/separator/negative electrode structure.

These unit cells 11 are respectively disposed in a plurality of first spaces 131 formed by first folding of a separator sheet 13. Also, independent electrodes 12, i.e., positive electrodes are respectively disposed in a plurality of second spaces 132 formed by second folding of the separator sheet 13. Accordingly, the electrode assembly 1d according to the fifth embodiment of the present invention may be manufactured.

Here, on the basis of the illustration in FIG. 5, the first folding may be referred to as folding toward the left side, and the second folding may be referred to as folding toward the right side. Thus, the plurality of the first spaces 131 formed by the first folding of the separator sheet 13 may be referred to as spaces having closed right sides and opened left sides on the basis of the illustration in FIG. 5, and the plurality of the second spaces 132 formed by the second folding of the separator sheet 13 may be referred to as spaces having closed left sides and opened right sides on the basis of the illustration in FIG. 5.

Thus, when the electrode assembly 1d is viewed from the left side, the independent electrode 12 is covered and not seen, but only the unit cell 11 is seen. On the other hand, when the electrode assembly 1d is viewed from the right side, the unit cell 11 is covered and not seen, but only the independent electrode 12 is seen.

The electrode assembly 1d is accommodated in a battery case after the electrode assembly 1d is manufactured, and thus, a secondary battery according to the fifth embodiment of the present invention may be manufactured.

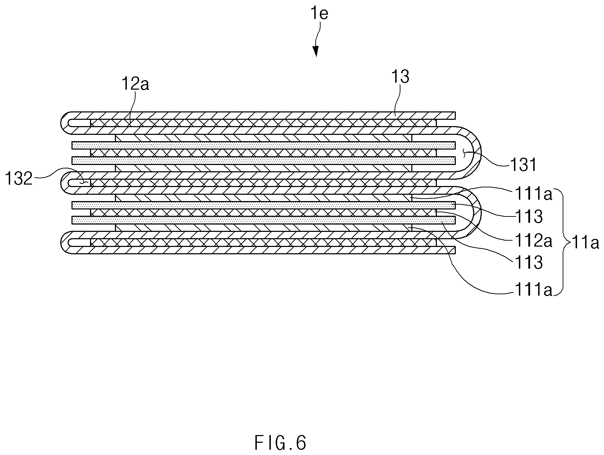

FIG. 6 is a schematic view of an electrode assembly 1e according to a sixth embodiment of the present invention.

According to the sixth embodiment of the present invention, only one inner electrode 112a is formed in a unit cell 11a. Also, a first polarity is a negative polarity, and a second polarity is a positive polarity. Hereinafter, the sixth embodiment of the present invention will be described, but the descriptions overlapping with those of the first to fifth embodiments of the present invention will be omitted. However, this is only for ease of description and is not intended to limit the scope of rights.

Thus, an independent electrode 12a according to the second embodiment of the present invention is a negative electrode. In the unit cell 11a, all of outer electrodes 111a on the two outermost surfaces are positive electrodes, and the inner electrode 112a is the same negative electrode as the independent electrode 12a. That is, as illustrated in FIG. 6, the unit cell 11a is an A type bi-cell having a positive electrode/separator/negative electrode/separator/positive electrode structure.

These unit cells 11a are respectively disposed in a plurality of first spaces 131 formed by first folding of a separator sheet 13. Also, independent electrodes 12a, i.e., negative electrodes are respectively disposed in a plurality of second spaces 132 formed by second folding of the separator sheet 13. Accordingly, the electrode assembly 1e according to the sixth embodiment of the present invention may be manufactured.

The electrode assembly 1e is accommodated in a battery case after the electrode assembly 1e is manufactured, and thus, a secondary battery according to the sixth embodiment of the present invention may be manufactured.

According to the embodiments of the present invention as described above, when the Z-folding type electrode assembly 1 having the high degree of alignment and the high impregnation rate of electrolyte is manufactured, not only the plurality of independent electrodes 12 but also the unit cells 11 are used together, and thus, the production rate may be enhanced. Also, it is sufficient to manufacture only one type of bi-cells, and thus, inconvenience in processes may be resolved.

Those with ordinary skill in the technical field to which the present invention pertains will understand that the present invention may be implemented in other specific forms without changing the technical idea or essential features. Therefore, the above-described embodiments are to be considered illustrative and not restrictive to all aspects. The scope of the present invention is defined by the appended claims rather than the foregoing detailed description, and various modifications derived from the meaning and scope of the claims and the equivalent concepts thereof should be interpreted as being included in the scope of the present invention.

### [Description of the Symbols]

| | | | |
|---|---|---|---|
| 1: | Electrode assembly | 11: | Unit cell |
| 12: | Independent electrode | 13: | Separator sheet |
| 111: | Outer electrode | 112: | Inner electrode |
| 113: | Separator | 131: | First space |
| 132: | Second space | 1121: | First inner electrode |
| 1122: | Second inner electrode | | |

## Claims

1. An electrode assembly comprising:
a separator sheet, which is formed in a single sheet shape and in which first folding of folding to one side and second folding of folding to the other side are repeated at certain intervals;
unit cells, which are formed by stacking a plurality of electrodes and separators and respectively disposed in a plurality of first spaces formed by the first folding of the separator sheet; and
independent electrodes, which are respectively disposed in a plurality of second spaces formed by the second folding of the separator sheet and have a first polarity.

2. The electrode assembly of claim 1, wherein, each of the unit cells is a bi-cell in which an outer electrode is stacked on each of two outermost surfaces, an inner electrode is stacked therein, each of the separators is disposed between the inner electrode and each of the outer electrodes, and the two outer electrodes have the same second polarity.

3. The electrode assembly of claim 2, wherein only one inner electrode is formed.

4. The electrode assembly of claim 3, wherein the inner electrode has the same first polarity as the independent electrode.

5. The electrode assembly of claim 2, wherein a plurality of inner electrodes are formed.

6. The electrode assembly of claim 5, wherein the number of inner electrodes is an odd number.

7. The electrode assembly of claim 5, wherein a first inner electrode of the inner electrodes is stacked such that the separator is disposed between the outer electrode and the first inner electrode, and
a second inner electrode of the inner electrodes is stacked such that the separator is disposed between the first inner electrode and the second inner electrode.

8. The electrode assembly of claim 7, wherein the first inner electrode has the same first polarity as the independent electrode.

9. The electrode assembly of claim 7, wherein the second inner electrode has the same second polarity as the outer electrode.

10. A secondary battery comprising:
an electrode assembly; and
a battery case configured to accommodate the electrode assembly therein,
wherein the electrode assembly comprises:
a separator sheet, which is formed in a single sheet shape and in which first folding of folding to one side and second folding of folding to the other side are repeated at certain intervals;
unit cells, which are formed by stacking a plurality of electrodes and separators and respectively disposed in a plurality of first spaces formed by the first folding of the separator sheet; and
independent electrodes, which are respectively disposed in a plurality of second spaces formed by the second folding of the separator sheet and have a first polarity.
